# EUROPÄISCHE PATENTSCHRIFT

(11) **EP 2 565 132 B1**
(45) Veröffentlichungstag und Bekanntmachung des Hinweises auf die Patenterteilung: **28.10.2015**
(21) Anmeldenummer: 12194738.6
(22) Anmeldetag: 10.12.2008
(51) Int. Cl.: B65D 85/804, A47J 31/36

(54) **Kapsel, Kapselkörper und Vorrichtung für die Zubereitung eines Getränks**
Capsule, capsule body and device for preparing a drink
Capsule, corps de capsule et dispositif de préparation d'une boisson

(43) Veröffentlichungstag der Anmeldung: 06.03.2013
(62) Teilanmeldung aus: 08105965.1
(73) Patentinhaber: Delica AG, 4127 Birsfelden (CH)
(72) Erfinder: Deuber, Louis, 8805 Richterswil (CH)
(74) Vertreter: Hepp Wenger Ryffel AG

(56) Entgegenhaltungen:
- WO-A1-2008/014830
- WO-A2-2008/087099
- DE-A1-102004 056 224

## Beschreibung

Die Erfindung betrifft eine Kapsel gemäss dem Oberbegriff von Anspruch 1. Derartige Kapseln werden heute verbreitet als Portionenverpackungen für die Zubereitung von beispielsweise Kaffee verwendet. Der Verbraucher muss sich nicht mehr um die Dosierung der richtigen Kaffeemenge kümmern und nach dem Extraktionsvorgang kann die Kapsel samt Inhalt entsorgt werden. Das Kaffeepulver bleibt ausserdem in der geschlossenen Kammer aromadicht verpackt und ist vor Feuchtigkeit geschützt.

Portionenverpackungen in Form von Kapseln sind seit längerer Zeit bekannt und gebräuchlich. Zum Stand der Technik gehören beispielsweise Kapseln, wie sie in der EP 1 101 430 und EP 1 344 722 gezeigt sind. Diese Kapseln zeichnen sich durch eine robuste Bauweise aus, wodurch sie teuer und für bestimmte Perforations- und Brühvorgänge nicht geeignet sind.

Eine gattungsmässig vergleichbare Kapsel zeigt die WO 2008/087099. Die Kapsel verfügt über einen Boden mit einer umlaufenden, nach aussen gerichteten Rinne. Die in der Draufsicht ringförmige Rinne ist in Bezug auf die Bodenmitte am äusseren Rand des Bodens angeordnet. Dabei bildet der etwa ebene Rinnenboden eine penetrierbare Zone für Penetrationsmittel, durch welche während des Brühvorgangs das Extraktionsfluid durchleitbar ist. Neben der Rinne ist ein zentraler, konvex nach aussen gewölbter und im Querschnitt etwa kreisförmiger Bodenabschnitt angeordnet, der durch eine Kraft von aussen nach innen stülpbar ist. Dieser Vorgang erfolgt abrupt und sprunghaft. Eine solche Kapsel weist verschiedene Nachteile auf. Dies hat zur Folge, dass der Boden nicht wie gewünscht in vordefinierter Weise nach innen eingedrückt, sondern ungleichmässig oder asymmetrisch deformiert wird. Ein weiterer Nachteil besteht darin, dass kein variables nach innen Eindrücken des Kapselbodens möglich ist. Die Kapsel lässt nur eine einzige Stellung (zentraler Bodenabschnitt eingestülpt) zu. Das Einsatzgebiet dieser Kapsel ist damit beschränkt.

Im Zuge der fortschreitenden Produktepiraterie sowie den hohen Anforderungen hinsichtlich Produktesicherheit, spielt ausserdem die Garantiefunktion und Fälschungssicherheit eine immer wichtigere Rolle. Ein Anzeigen unerwünschter Manipulationen im Bereich der penetrierbaren Zone am Boden der Kapseln im Sinne einer Garantiefunktion können die bekannten Kapseln nur ungenügend erfüllen.

Es ist deshalb eine Aufgabe der vorliegenden Erfindung, die Nachteile des Bekannten zu vermeiden und insbesondere eine Kapsel der eingangs genannten Art zu schaffen, deren Boden sich auf eine vorteilhafte Art und Weise verformen lässt. Weiter soll sie einen optimierten Brühvorgang ermöglichen, der zu einer Verbesserung der Extraktionsqualität führt. Insbesondere soll sie eine optimale Dichtwirkung des Bodens gegenüber den Penetrationsmitteln beim Brühvorgang gewährleisten. Wünschenswert ist weiter eine Kapsel, die an verschiedene Kammerformen oder Brühsysteme anpassbar ist. Die Kapsel soll bei Bedarf auch mit einer Garantiefunktion ausgerüstet sein und höheren Ansprüchen hinsichtlich Fälschungssicherheit genügen.

Diese Aufgaben werden durch eine Kapsel gelöst, die die Merkmale in Anspruch 1 aufweist. Dadurch, dass der Boden in einer Ruhelage (d.h. im unbelasteten Zustand) zum Vorgeben einer vorzugsweise definierten Deformation wenigstens abschnittsweise balgartig ausgestaltet ist, können verschiedene Vorteile erzielt werden. Dabei kann der Boden der Kapsel durch mechanische Krafteinwirkung von aussen nach innen eindrückbar sein. Mit der erfindungsgemässen Ausgestaltung der Kapsel kann beispielsweise die Eindrücktiefe und Eindrückform des Bodens je nach Einsatzzweck variiert werden. Die besondere Ausgestaltung des Bodens ermöglicht, unterschiedliche Anschlagelemente zu verwenden, welche einem Kapselhalter zugeordnet sind. Der Einsatzbereich der Kapsel lässt sich somit erheblich erweitern. Wegen der balgartigen Ausgestaltung weist der Boden im Verhältnis zur Bodenfläche mehr Wandmaterial auf. Dadurch kann beim Brühvorgang die Dichtwirkung verbessert werden. Die Reduktion des Volumens des Innenbereichs hat weiter Vorteile für die Brühqualität, da die Trockensubstanz (z.B. Kaffeepulver) in der Kammer der Kapsel zuerst (d.h. bevor ein Extraktionsmedium eingeleitet wird) komprimiert wird. Vorteilhaft kann es alternativ sein, wenn der Boden der Kapsel durch hydraulische Krafteinwirkung infolge Einleiten einer Flüssigkeit in die Kammer der Kapsel von innen nach aussen bewegbar ist. In diesem Fall würde sich eine Vergrösserung des Kammervolumens der Kapsel ergeben. Mit der balgartigen Konfiguration des Kapselbodens kann das Kapselkammervolumen praktisch beliebig variiert werden.

Je nach Formgebung des Balgs sowie gegebenenfalls je nach Wahl des Kapselkörpermaterials kann der Boden elastisch oder plastisch im kalten Zustand verformbar sein. Im letzteren Fall ist der Eindrückvorgang nach Wegnahme der Druckkraft nicht mehr reversibel, wodurch eine Einbuchtung verbleibt. Ein Verbraucher erkennt also, wenn an der Kapsel auf unerwünschte Art und Weise im Bereich des Bodens Manipulationen vorgenommen wurden. Die Kapsel kann also auch eine Garantiefunktion aufweisen. Weiterhin ist ein Balg im Boden nicht ohne weiteres herzustellen, wodurch das Produkt relativ fälschungssicher ist.

Der Balg kann sich in Richtung der Bodenebene erstrecken. Theoretisch ist es aber auch denkbar, dass der Balg schräg oder sogar senkrecht zur Bodenebene verlaufen kann.

Die balgartige Konfiguration ist durch wellenförmige Wandabschnitte gebildet. Diese Wandabschnitte können in einer Draufsicht auf den Boden die Bodenmitte umlaufen oder umgeben. Grundsätzlich ist es aber auch denkbar, dass die balgartige Konfiguration durch eine andere Formgebung des Bodens erreicht wird.

Die wellenförmigen Wandabschnitte weisen nach innen gerichtete U-förmige Rinnen auf. Derartige U-förmige Rinnen haben insbesondere bei der Verwendung von Kunststoff für den Kapselkörper Vorteile. So können beispielsweise unerwünschte Risse oder Brüche beim Eindrückvorgang vermieden werden.

Es sind wenigstens zwei Rinnen vorgesehen, die in Bezug auf eine Draufsicht auf den Boden ringförmig ausgestaltet sind und die vorzugsweise in Bezug auf die Bodenmitte auf konzentrischen Kreisen liegen. Denkbar sind insbesondere drei oder mehrerer solcher Rinnen. Grundsätzlich sind sodann auch Kapseln denkbar, deren Rinnen das Zentrum des Bodens nicht in einer Kreisform umgeben. Bei beispielsweise im Wesentlichen quaderförmigen oder trapezoid-förmigen Kapseln könnten die Rinnen in der Draufsicht eine Rechteckform aufweisen. Die Kapsel kann alternativ eine U-förmige Rinne aufweisen, die in der Draufsicht spiralförmig ausgestaltet ist. In diesem Fall kann diese Rinne wenigstens zwei und vorzugsweise wenigstens drei Spiralumgänge aufweisen.

Zwischen zwei benachbarten Rinnen kann ein nach aussen gerichteter, U-förmiger Stegwandabschnitt angeordnet sein. Somit wäre die balgartige Konfiguration also durch nach aussen und nach innen gerichtete U-förmige Rinnen gebildet, die sich alternierend abwechseln können.

Die Rinnen und/oder der zwischen den Rinnen angeordnete Stegwandabschnitt können/kann im Querschnitt bogenförmig und bevorzugt etwa kreisförmig ausgestaltet sein. Durch diese Formgebung des Balgs ist eine unerwünschte Beschädigung des Bodens beim Eindrückvorgang praktisch ausgeschlossen.

Für ein definiertes Vorgeben des Eindrückvorgangs kann es vorteilhaft sein, wenn im Bereich der Kapselmitte ein nach aussen gerichteter, im Querschnitt vorzugsweise etwa U-förmiger Zapfen zum Vorgeben einer Anschlagfläche für einen einer Vorrichtung zugeordneten Stempel angeordnet ist. Die Vorrichtung kann eine Vorrichtung für die Zubereitung eines Getränks und insbesondere von Kaffee sein, wobei der Stempel im Bereich einer Kavität eines Kapselhalters für die Kapsel angeordnet sein kann.

Besonders vorteilhaft kann es sein, wenn der Zapfen einen auf einer Bodenebene liegenden, vorzugsweise etwa planparallel zur Bodenebene verlaufenden Bodenabschnitt aufweist. Vorteile in der Handhabung können sich ergeben, wenn der Bodenabschnitt und wenigstens der Stegwandabschnitt einen Umriss bilden, der auf der Bodenebene liegt.

Ein weiterer Aspekt der Erfindung betrifft eine Vorrichtung mit der vorgängig beschriebenen Kapsel für die Zubereitung eines Getränks. Die Vorrichtung verfügt über zwei zur Bildung einer Extraktionskammer gegeneinander pressbare Kammerteile. Dabei ist ein Kammerteil als Kapselhalter mit einer Kavität zur Aufnahme der Kapsel und das andere Kammerteil als Schlussteil zum Verschliessen der Kavität ausgebildet. Der Boden der Kavität weist Mittel enthaltend vorzugsweise mehrere Perforationselemente zum Penetrieren des Bodens der Kapsel auf. Das Verschlussteil ist ebenfalls mit einem oder mehreren Penetrationselementen zum Penetrieren des Deckels versehen. Die einander gegenüber liegenden Penetrationselemente sind derart ausgestaltet, dass bei geschlossener Kavität eine darin angeordnete Kapsel am Boden und am Deckel zum Durchleiten einer Flüssigkeit penetrierbar ist.

Eine bevorzugte Ausführungsform der Vorrichtung kann derart ausgestaltet sein, dass die der Kavität zugeordneten Penetrationselemente im Bereich des balgartigen Abschnitts des Bodens den Boden angreifen bzw. penetrieren können. Die Penetrationselemente können im Bereich der wellenförmigen Wandabschnitte den Boden angreifen.

Die der Kavität zugeordneten Penetrationselemente können vorzugsweise gleichmässig verteilt auf einem Kreis liegend auf dem Boden der Kavität angeordnet sein. Der Boden kann einen als zentrale Erhöhung ausgestalteten Stempel aufweisen, um den herum die Penetrationselemente angeordnet sein können. Die Erhöhung kann zylindrisch oder kegelstumpfförmig ausgestaltet sein. Sie kann weiterhin eine vorzugsweise zur Bodenebene etwa planparallel verlaufende Oberseite aufweisen, die einen Anschlag für einen korrespondierenden Zapfen der Kapsel bilden kann. Auf dem Stempel kann eine Schraubendruckfeder angeordnet sein, deren freies Ende an den Boden einer gegen den Boden der Kavität pressbaren Kapsel anlegbar ist.

Die Penetrationselemente können sich zu einer Spitze oder zu einer Schneide verjüngende Körper aufweisen. Dieser Körper kann mit Filteröffnungen versehene Seitenflächen aufweisen, wobei die Filteröffnungen für einen optimalen Abfluss von Kaffeeextrakt eine Lochsieb-Konfiguration bilden können. Derartige Penetrationselemente sind beispielsweise aus der WO 2008/087099 oder der WO 2008/023057 bekannt geworden.

Vorteilhaft kann es sein, wenn der Stempel lösbar am Boden der Kavität des Kapselhalters befestigbar ist. Der Stempel kann beispielsweise eine Bohrung aufweisen, durch die eine Befestigungsschraube zum Fixieren des Stempels im Verschlussteil durchführbar ist. Eine solche Anordnung hat den Vorteil, dass die Vorrichtung auf einfache Art und Weise je nach Bedarf mit unterschiedlich geformten und/oder hohen Stempeln ausrüstbar ist.

Weitere Vorteile und Einzelmerkmale der Erfindung ergeben sich aus den nachstehend beschriebenen Ausführungsbeispielen und aus den Zeichnungen, wobei die in der Vorrichtung gemäss den Figuren 1 bis 6a dargestellten Kapseln nicht einer erfindungsgemässen Ausführungsform entsprechen. Es zeigen:
- Figur 1: einen Längsschnitt durch eine Brühvorrichtung und eine darin eingelegte Kapsel in Offenstellung,
- Figur 2: die Brühvorrichtung gemäss Figur 1 in Schliessstellung,
- Figur 3: die Brühvorrichtung gemäss Figur 1 in Brüh- bzw. Extraktionsstellung,
- Figur 4: eine Detailansicht der Kapsel zwischen zwei Kammerteilen der Vorrichtung in Offenstellung,
- Figur 5: die Kapsel nach dem Schliessen der Kammerteile in gegenüber Figur 4 nochmals leicht vergrösserten Darstellung,
- Figur 5a: eine Variante zu Figur 5,
- Figur 6: die Kapsel während dem Brühvorgang,
- Figur 6a: Eine Variante zu Figur 6,
- Figur 7: eine Querschnittsdarstellung eines Kapselkörpers für eine erfindungsgemässe Kapsel,
- Figur 8: eine vergrösserte Detaildarstellung des Kapselbodens aus Figur 7,
- Figur 9: eine befüllte Kapsel mit dem Kapselkörper gemäss Figur 7 und einem Deckel,
- Figur 10: aufeinander gestapelte Kapselkörper gemäss Figur 7,
- Figur 11: eine perspektivische Darstellung des Kapselkörpers gemäss Figur 7 in einer Vorderansicht,
- Figur 12: eine perspektivische Rückansicht des Kapselkörpers, und,
- Figur 13: eine perspektivische Darstellung eines Mittels zum Penetrieren eines Bodens einer Kapsel.

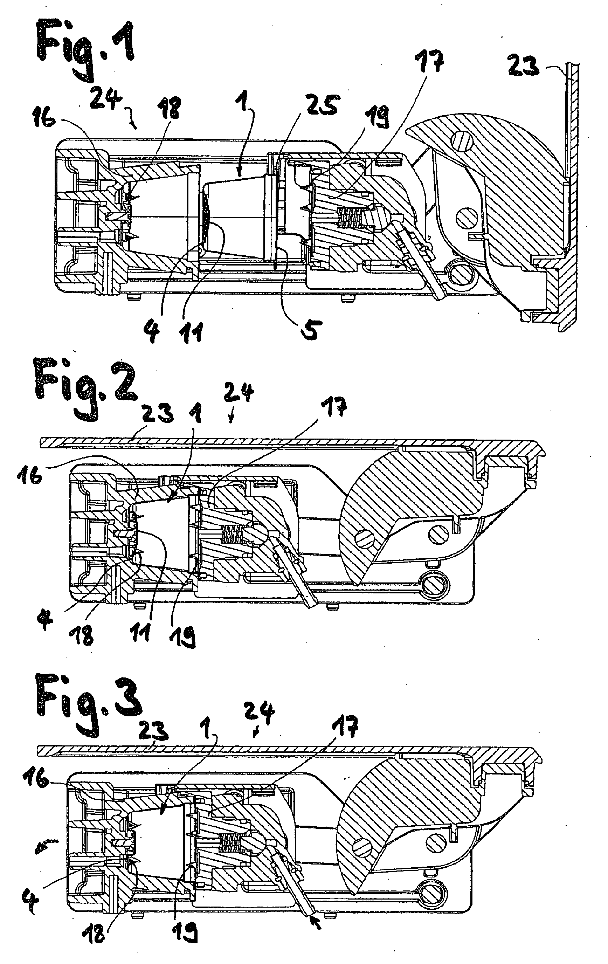

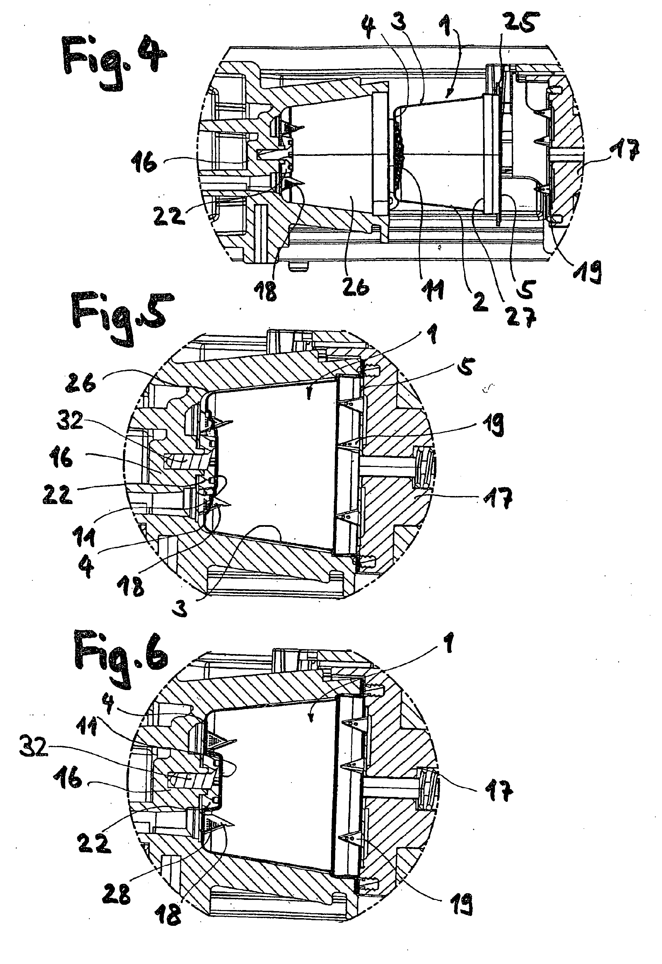

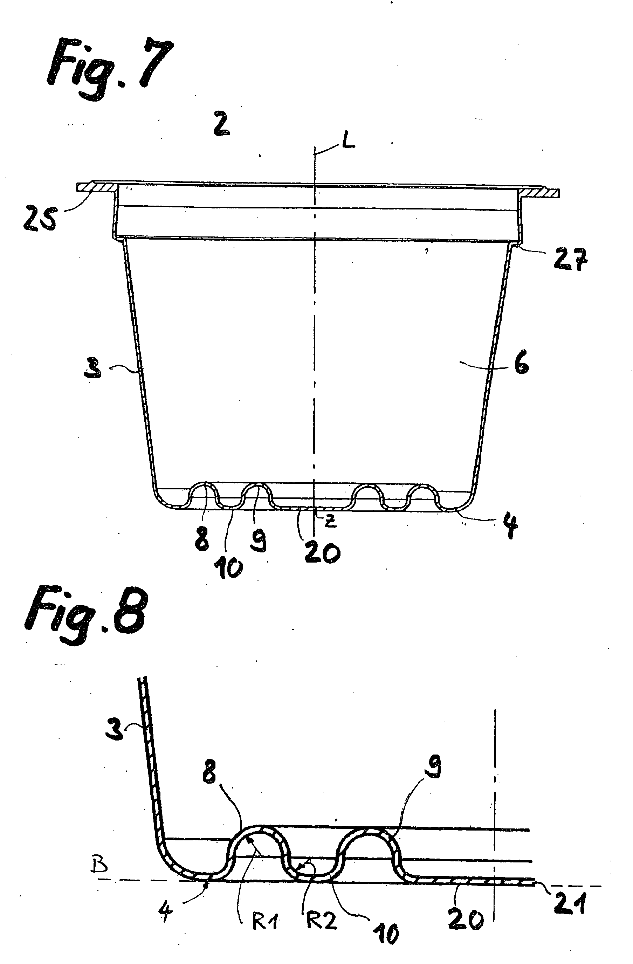

Figur 1 zeigt eine Vorrichtung 24 zum Brühen von Kaffee mit einer darin eingelegten, mit 1 bezeichneten Kapsel. Die Kapsel 1 weist einen Kapselkörper 2 auf, dessen Boden 4 balgartig ausgestaltet ist. Der Aufbau und die Funktions- und Wirkungsweise der mit einem Faltenbalg 11 versehene Kapsel 1 wird nachfolgend anhand der Figuren 4 bis 6 sowie vor allem anhand der Figuren 7 bis 12 im Detail beschrieben.

Die Vorrichtung 24 verfügt über zwei Kammerteile 16 und 17, die in axialer Richtung relativ zu einander verschiebbar sind. Beim vorliegenden Ausführungsbeispiel ist das als Verschlussteil ausgebildete Kammerteil 17 bewegbar, während das andere Kammerteil 16 feststehend in der Vorrichtung 24 angeordnet ist. Das Kammerteil 16 ist als Kapselaufnahme mit einer Kavität 26 ausgestaltet, in die die Kapsel 1 aufnehmbar ist. In der in Figur 1 gezeigten Ausgangsposition (Offenstellung) ist die Kapsel 1 zwischen dem Kapselhalter 16 und dem Verschlussteil 17 positioniert. Sowohl Kapselhalter 16 als auch Verschlussteil 17 weisen jeweils Penetrationselemente 18 bzw. 19 auf, mit denen der Boden der Kapsel bzw. ein Deckel 5 der Kapsel penetrierbar ist und durch die ein Extraktionsmedium durchleitbar ist. Die in Figur 1 gezeigten Penetrationselement sind aus der WO 2008/023057 bekannt geworden und dort ausführlich beschrieben. Grundsätzlich eignet sich die Kapsel 1 auch für andere Varianten von Penetrationselementen. Die Schliessbewegung wird manuell durch Betätigen eines Schwenkhebels 23 bewirkt. Die Vorrichtung 24 ist beispielhaft in horizontaler Ausrichtung in eine entsprechende Maschine eingebaut. Auch der in den Figuren 1 bis 3 gezeigte Schliessmechanismus stellt lediglich ein Beispiel dar und führt zu keiner Beschränkung des Schutzumfangs.

Figur 2 zeigt die Vorrichtung in einer Schliessstellung. Wie aus Figur 1 hervorgeht, wurde der Boden 4 der Kapsel 1 nach innen eingedrückt. Die Penetrationselemente 18 dringen in dieser Position erst teilweise in den Boden 4 ein. Eine vollständige Durchdringung des Bodens 4 ergibt sich erst in der Brühstellung, in der der Boden 4 der Kapsel infolge des Druckaufbaus in der Kapselkammer am Boden der Kavität des Kapselhalters 16 anliegt. Diese Stellung ist in Figur 3 gezeigt.

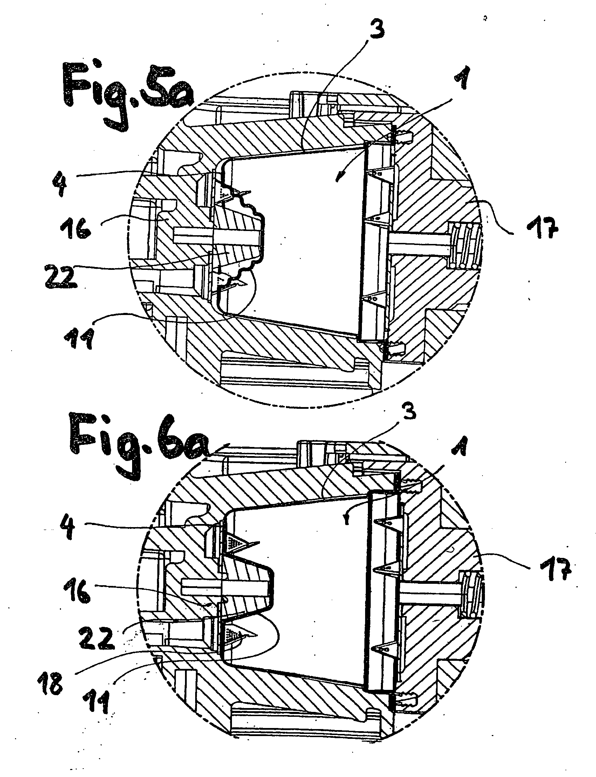

Die Figuren 4 bis 6 zeigen Detaildarstellungen der Kapsel 1 in unterschiedlichen Stellungen. Figur 4 zeigt die unbelastete Kapsel 1 (Kapsel in Ruhelage, Vorrichtung in Offenstellung); Figur 5 zeigt die Kapsel 1 nach dem Schliessvorgang, jedoch vor dem Aufbringen eines Brühdrucks; und Figur 6 zeigt die Kapsel 1 in der Extraktionsstellung. Aus Figur 4 ist beispielsweise deutlich erkennbar, dass die Kapsel 1 mit Hilfe einer (nicht näher beschriebenen) Positioniereinheit in einer horizontalen Lage zwischen den Kammerteilen 16 und 17 positioniert ist. Das als Kapselhalter ausgestaltete Kammerteil 16 verfügt über eine Kavität 26 zur Aufnahme der Kapsel. Nach dem Schliessvorgang ist die Kapsel 1 in der Kavität 26 des Kapselhalters 16 aufgenommen. Die injektionsseitigen Penetrationselemente 19 durchdringen in dieser Stellung den folienartigen Deckel 5 vollständig. Auf der gegenüber liegenden Seite hingegen fand erst eine teilweise Perforation statt. Der balgartige Abschnitt des Bodens 4 wurde vom Stempel 22 nach innen eingedrückt und liegt an der Stempeloberseite an. Der so nach innen eingedrückte Boden weist in dieser Stellung einen entfalteten Faltenbalg 11 auf. Die Penetrationselemente 18 durchdringen den Boden 4 nur teilweise. In diesem Ausführungsbeispiel ist zwar keine dem Stempel zugeordnete Schraubendruckfeder gezeigt. Optional wäre es aber denkbar, eine solche an der dem Boden der Kapsel zugewandten Seite des Stempels anzuordnen. Diese Schraubendruckfeder würde eine vom Boden der Kavität weggerichtete Kraft bewirken, welche das Ablösen der Kapsel aus dem Kapselhalter bzw. von den Penetrationselementen erleichtern würde.

Der Boden 4 der Kapsel 1 verfügt über einen mit 11 bezeichneten Faltenbalg, wodurch eine vorteilhafte Bodenflexibilität erreicht wird. Nach dem Injizieren eines Extraktionsfluids in die Kapsel 1, wird der Boden 4 der Kapsel gegen den Boden der Kavität des Kammerteils bewegt. Nach Überschreiten eines bestimmten Drucks in der Kapsel ist der Boden 4 formschlüssig und druckdicht gegen den Boden der Kavität gepresst. In dieser Brüh- oder Extraktionsstellung ist der maximale Abflussquerschnitt an den Filteröffnungen 28 der Penetrationselemente 18 erreicht. Der Extrakt fliesst danach durch Ablaufkanäle, wo er auf geeignete Weise aufgefangen und weggeleitet werden kann (in Figur 3 mit einem Pfeil angedeutet). Geschmacksproben haben überraschenderweise gezeigt, dass mit derartigen Kapseln gegenüber herkömmlichen Kapseln hervorragende Resultate erreicht werden können.

In den Figuren 5 und 6 ist sodann eine Senkkopfschraube 32 erkennbar, mit der der Stempel 22 in den Kapselhalter 16 einbaubar ist. Der Stempel 22 kann auf einfache Art und Weise demontiert und - falls gewünscht - durch einen anderen ersetzt oder ausgetauscht werden (vgl. nachfolgende Fig. 5a und 6a).

Die in den Figuren 5a und 6a dargestellte Vorrichtung zum Brühen von Kaffee oder anderen Getränken unterscheidet sich vom vorgängigen Ausführungsbeispiel nur durch einen verschieden ausgestalteten Stempel 22 (der Einfachheit halber ohne Befestigungsschraube dargestellt). Auch wird hier die gleiche Kapsel 1 verwendet. Der Stempel 22 ist als kegelstumpfförmige Erhebung ausgestaltet, wobei die Höhe des Stempels 22 in Richtung der Längsmittelachse gegenüber dem Ausführungsbeispiel gemäss Figur 5/6 deutlich grösser ist. Die Vorteile des Kapselbodens sind vor allem in Figur 5a gut erkennbar. Dank des Faltenbalgs 11 lässt sich der Boden 4 der Kapsel relativ tief in das Innere der Kapsel eindrücken. Das Kammervolumen kann also nochmals deutlich reduziert werden. Die Seitenwand 3 der Kapsel verbleibt dabei (mehr oder weniger) unverändert.

Die Figuren 7 bis 12 zeigen einen Kapselkörper 2 mit einer erfindungsgemässen Ausgestaltung des Bodens 4. Auch hier ist der Boden 4 abschnittsweise balgartig ausgestaltet. Die balgartige Konfiguration wird durch wellenförmige, die Bodenmitte Z umlaufende Wandabschnitte gebildet. Die Wellenform weist zwei nach innen gerichtete U-förmige Rinnen 8 und 9 auf. Zwischen diesen beiden Rinnen 8,9 ist ein ebenfalls U-förmiger Stegwandabschnitt 10 angeordnet. Die Rinnen 8 und 9 sind im Querschnitt etwa kreisförmig ausgestaltet, wobei der Rinnenradius R1 beispielsweise 2mm betragen kann. Der mit R2 bezeichnete Radius des ebenfalls bogenförmigen Stegwandabschnitts 10 beträgt ebenfalls ca. 2mm. Mittig im Boden 4 ist ein nach aussen gerichteter, im Querschnitt etwa U-förmiger Zapfen zum Vorgeben einer Anschlagfläche für den (hier nicht gezeigten) Stempel der Brühvorrichtung angeordnet. Dieser Zapfen unterbricht die Wellenform des daneben liegenden Balgs. Selbstverständlich wäre es grundsätzlich aber auch vorstellbar, den ganzen Boden balgartig mit einer gleichförmigen Welle auszugestalten.

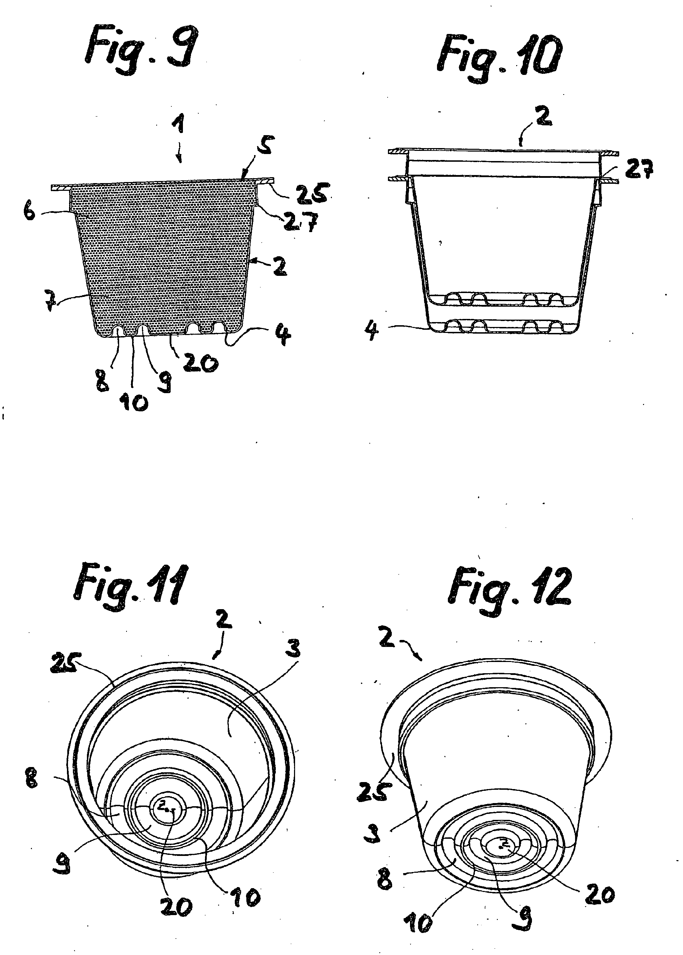

Wie aus den Figuren 11 und 12 hervorgeht, sind die Rinnen 8 und 9 in der Draufsicht auf den Boden 4 ringförmig ausgestaltet und liegen auf konzentrischen Kreisen. Selbstverständlich wäre es aber auch denkbar, die U-förmigen und im Querschnitt bogenförmigen Rinnen 8, 9 sowie 10 mit einer Spiralform zu kombinieren.

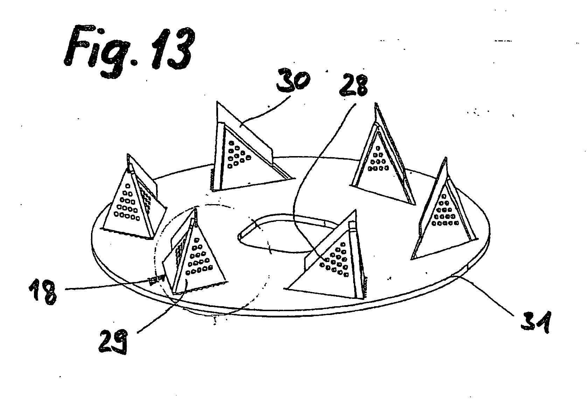

In Figur 13 ist ein Beispiel für das Penetrationsmittel 31 vergrössert dargestellt. Das Penetrationsmittel besteht aus einer flachen Scheibe, auf der kreisringförmig mehrere zeltartige bzw. pyramidenförmige Penetrationselemente 18 angeordnet sind. Diese bestehen aus Lochseitenwänden 29, welche gegen die Penetrationsrichtung geneigt sind, wobei jeweils eine Seitenwand aus dem Material der Scheibe ausgestanzt und aufgerichtet sein kann. Die beiden übrigen Lochseitenwände werden danach aufgesetzt und mit der Scheibe bzw. mit der aufgerichteten Lochseitenwand verschweisst. Um ein noch leichteres Penetrieren des Kapselbodens zu erreichen, können zusätzliche Messerschneiden 30 eingefügt sein. Die Lochseitenwände 29 können dabei sehr feine Filteröffnungen 28 aufweisen. Die so gebildeten Penetrationskörper dringen leicht in den Balg der Kapsel ein und bewirken einen raschen Abfluss der Flüssigkeit mit sehr guter Siebwirkung.

## Patentansprüche

1. Kapsel (1), bestehend aus einem vorzugsweise rotationssymmetrisch ausgebildeten Kapselkörper (2) mit einer Seitenwand (3) und mit einem einstückig mit dieser ausgebildeten Boden (4), sowie mit einem den Kapselkörper abdeckenden Deckel (5) zur Bildung einer geschlossenen Kammer (6), welche eine Substanz (7) für die Zubereitung eines Getränks enthält, wobei der Deckel und der Boden für die Durchleitung einer Flüssigkeit durch die Kammer mit ausserhalb der Kapsel angeordneten Mitteln (18,19) penetrierbar sind, wobei der Boden (4) derart flexibel ausgestaltet ist, dass er durch Krafteinwirkung verformbar ist, **dadurch gekennzeichnet, dass** zum Vorgeben einer definierten Deformation der Boden (4) in einer Ruhelage wenigstens abschnittsweise derart balgartig ausgestaltet ist, dass die Eindrücktiefe und Eindrückform des Bodens variierbar ist,wobei die balgartige Konfiguration durch wellenförmige Wandabschnitte (8,9,10) gebildet wird, welche nach innen gerichtete U-förmige Rinnen (8,9) aufweisen, und **dass** wenigstens zwei Rinnen (8,9) vorgesehen sind, die in Bezug auf eine Draufsicht auf den Boden (4) ringförmig ausgestaltet sind und die vorzugsweise in Bezug auf die Bodenmitte, auf konzentrischen Kreisen liegen, oder wobei die balgartige Konfiguration eine U-förmige Rinne aufweist, die in der Draufsicht spiralförmig ausgestaltet ist.

2. Kapsel nach Anspruch 1, **dadurch gekennzeichnet, dass** zwischen zwei benachbarten Rinnen (8,9) ein nach aussen gerichteter, U-förmiger Stegwandabschnitt (10) angeordnet ist.

3. Kapsel nach einem der Ansprüche 1 oder 2, **dadurch gekennzeichnet, dass** die Rinnen (8,9) und/oder der zwischen den Rinnen angeordnete Stegwandabschnitt (10) im Querschnitt bogenförmig und bevorzugt etwa kreisförmig ausgestaltet sind.

4. Kapsel nach einem der Ansprüche 1 bis 3, **dadurch gekennzeichnet, dass** im Bereich der Kapselmitte ein nach aussen gerichteter, im Querschnitt etwa U-förmiger Zapfen (20) zum Vorgeben einer Anschlagfläche für einen einer Vorrichtung zugeordneten Stempel angeordnet ist.

5. Kapsel nach Anspruch 4, **dadurch gekennzeichnet, dass** der Zapfen (20) einen auf einer Bodenebene (B) liegenden, vorzugsweise etwa planen Bodenabschnitt (21) aufweist.

6. Kapsel nach Anspruch 4 oder 5, **dadurch gekennzeichnet, dass** der Bodenabschnitt (21) und wenigstens der Stegwandabschnitt (10) eine Aussenkontur bilden, die auf der Bodenebene (B) liegen.

7. Kapsel nach Anspruch 1, **dadurch gekennzeichnet, dass** die Rinne wenigstens zwei und vorzugsweise wenigstens drei Spiralumgänge aufweist.

8. Kapsel nach Anspruch 1, **dadurch gekennzeichnet, dass** die balgartige Konfiguration durch nach aussen und nach innen gebildete U-förmige Rinnen gebildet ist, die sich alterierend abwechseln.

9. Kapselkörper für eine Kapsel gemäss einem der Ansprüche 1 bis 8, bestehend aus einer Seitenwand (3) und einem einstückig mit dieser ausgebildeten Boden (4), wobei der Boden penetrierbar ist und derart flexibel ausgestaltet ist, dass er durch Krafteinwirkung verformbar ist, **dadurch gekennzeichnet, dass** der Boden (4) in einer Ruhelage wenigstens abschnittsweise balgartig ausgestaltet ist, wobei die balgartige Konfiguration durch wellenförmige Wandabschnitte (8,9,10) gebildet wird, welche nach innen gerichtete U-förmige Rinnen (8,9) aufweisen, und dass wenigstens zwei Rinnen (8,9) vorgesehen sind, die in Bezug auf eine Draufsicht auf den Boden (4) ringförmig ausgestaltet sind und die vorzugsweise in Bezug auf die Bodenmitte auf konzentrischen Kreisen liegen, oder dass die Kapsel eine U-förmige Rinne aufweist, die in der Draufsicht spiralförmig ausgestaltet ist.

10. Vorrichtung mit einer Kapsel nach einem der Ansprüche 1 bis 8 für die Zubereitung eines Getränks, mit zwei zur Bildung einer geschlossenen Kammer gegeneinander pressbaren Kammerteilen, wobei ein Kammerteil als Kapselhalter (16) mit einer Kavität zur Aufnahme einer Kapsel und das andere Kammerteil als Verschlussteil (17) zum Verschliessen der Kavität ausgebildet ist und wobei der Boden der Kavität ein Mittel enthaltend vorzugsweise mehrere Penetrationselemente (18) zum Penetrieren des Bodens (4) der Kapsel (1) aufweist und das Verschlussteil ebenfalls mit Penetrationselementen (19) versehen ist, derart, dass bei geschlossener Kavität eine darin angeordnete Kapsel (1) am Boden (4) und am Deckel (5) zum Durchleiten einer Flüssigkeit penetrierbar ist.

11. Vorrichtung nach Anspruch 10, **dadurch gekennzeichnet, dass** wenigstens ein Penetrationselement (18) im Bereich der wellenförmigen Wandabschnitte (8, 9, 10) am Boden (4) angreift.

12. Vorrichtung nach Anspruch 10 oder 11, **dadurch gekennzeichnet, dass** sie einen Stempel (22) vorzugsweise in Form einer zentralen Erhebung zum Eindrücken des balgartig ausgestalteten Abschnitts des Bodens aufweist.

13. Vorrichtung nach Anspruch 12, **dadurch gekennzeichnet, dass** der Stempel (22) lösbar am Boden der Kavität des Kapselhalters (16) befestigbar oder befestigt ist.

## Claims

1. Capsule (1), consisting of a capsule body (2) that is configured in a preferably rotationally symmetrical manner and has a side wall (3) and a base (4) configured so as to be integral therewith, and also having a cover (5), covering the capsule body, for forming a closed chamber (6) which contains a substance (7) for the preparation of a beverage, wherein the cover and the base are able to be penetrated by means (18, 19) arranged outside the capsule for the passage of a liquid through the chamber, wherein the base (4) is designed in a flexible manner such that it is deformable by application of force, **characterized in that**, in order to specify a defined deformation, the base (4) is designed at least regionally in a bellows-like manner in a rest position such that the indentation depth and indentation shape of the base are variable, wherein the bellows-like configuration is formed by wave-like wall portions (8, 9, 10) which have inwardly directed U-shaped channels (8, 9), and **in that** provision is made of at least two channels (8, 9) which are designed in an annular manner with regard to a plan view of the base (4) and which preferably lie in concentric circles with regard to the middle of the base, or wherein the bellows-like configuration has one U-shaped channel which is designed in a spiral shape in plan view.

2. Capsule according to Claim 1, **characterized in that** an outwardly directed, U-shaped web wall portion (10) is arranged between two adjacent channels (8, 9).

3. Capsule according to either of Claims 1 and 2, **characterized in that** the channels (8, 9) and/or the web wall portion (10) arranged between the channels are designed in an arcuate and preferably approximately circular manner in cross section.

4. Capsule according to one of Claims 1 to 3, **characterized in that** an outwardly directed, cross-sectionally approximately U-shaped peg (20) for specifying an impact surface for a punch assigned to a device is arranged in the region of the middle of the capsule.

5. Capsule according to Claim 4, **characterized in that** the peg (20) has a preferably approximately planar base portion (21) that lies on a base plane (B).

6. Capsule according to Claim 4 or 5, **characterized in that** the base portion (21) and at least the web wall portion (10) form an outer contour which lies on the base plane (B).

7. Capsule according to Claim 1, **characterized in that** the channel has at least two and preferably at least three spiral turns.

8. Capsule according to Claim 1, **characterized in that** the bellows-like configuration is formed by outwardly and inwardly formed U-shaped channels which alternate with one another.

9. Capsule body for a capsule according to one of Claims 1 to 8, consisting of a side wall (3) and a base (4) configured so as to be integral therewith, wherein the base is able to be penetrated and is designed in a flexible manner such that it is deformable by application of force, **characterized in that** the base (4) is designed at least regionally in a bellows-like manner in a rest position, wherein the bellows-like configuration is formed by wave-like wall portions (8, 9, 10) which have inwardly directed U-shaped channels (8, 9), and **in that** provision is made of at least two channels (8, 9) which are designed in an annular manner with regard to a plan view of the base (4) and which preferably lie in concentric circles with regard to the middle of the base, or **in that** the capsule has one U-shaped channel which is designed in a spiral shape in plan view.

10. Device having a capsule according to one of Claims 1 to 8 for the preparation of a beverage, having two chamber parts that are able to be pressed together in order to form a closed chamber, wherein one chamber part is configured as a capsule holder (16) with a cavity for receiving a capsule and the other chamber part is configured as a closure part (17) for closing the cavity, and wherein the base of the cavity has a means containing preferably a plurality of penetration elements (18) for penetrating the base (4) of the capsule (1) and the closure part is likewise provided with penetration elements (19) such that, with the cavity closed, a capsule (1) arranged therein is able to be penetrated in the base (4) and in the cover (5) for the passage of a liquid.

11. Device according to Claim 10, **characterized in that** at least one penetration element (18) acts on the base (4) in the region of the wave-like wall portions (8, 9, 10).

12. Device according to Claim 10 or 11, **characterized in that** it has a punch (22) preferably in the form of a central elevation for indenting the portion of the base that is configured in a bellows-like manner.

13. Device according to Claim 12, **characterized in that** the punch (22) is fastened or fastenable detachably to the base of the cavity of the capsule holder (16).

## Revendications

1. Capsule (1), constituée d'un corps de capsule (2) réalisé de préférence avec une symétrie de révolution, comprenant une paroi latérale (3) et un fond (4) réalisé d'une seule pièce avec celle-ci, ainsi qu'un couvercle (5) recouvrant le corps de capsule pour former une chambre fermée (6), qui contient une substance (7) pour préparer une boisson, le couvercle et le fond, pour le passage d'un liquide à travers la chambre, pouvant être percés par des moyens (18, 19) disposés à l'extérieur de la capsule, le fond (4) étant configuré sous forme flexible de telle sorte qu'il puisse être déformé par l'action d'une force, **caractérisée en ce que** pour prédéfinir une déformation définie, le fond (4), dans une position de repos, est configuré au moins en partie sous forme de soufflet de telle sorte que la profondeur d'enfoncement et la forme d'enfoncement du fond soient variables, la configuration de type soufflet étant formée par des portions de paroi de forme ondulée (8, 9, 10) qui présentent des rainures en forme de U (8, 9) orientées vers l'intérieur, et **en ce qu'**au moins deux rainures (8, 9) sont prévues, lesquelles sont configurées sous forme annulaire par rapport à une vue de dessus du fond (4) et lesquelles sont situées, de préférence par rapport au centre du fond, sur des cercles concentriques, ou la configuration en forme de soufflet présentant une rainure en forme de U qui est configurée en forme de spirale en vue de dessus.

2. Capsule selon la revendication 1, **caractérisée en ce qu'**entre deux rainures adjacentes (8, 9) est disposée une portion de paroi de nervure (10) en forme de U orientée vers l'extérieur.

3. Capsule selon l'une quelconque des revendications 1 ou 2, **caractérisée en ce que** les rainures (8, 9) et/ou la portion de paroi de nervure (10) disposée entre les rainures sont configurées en section transversale en forme d'arc et de préférence approximativement sous forme circulaire.

4. Capsule selon l'une quelconque des revendications 1 à 3, **caractérisée en ce que** dans la région du centre de la capsule est disposé un tourillon (20) de section transversale approximativement en forme de U, orienté vers l'extérieur, pour prédéfinir une surface de butée pour un poinçon associé à un dispositif.

5. Capsule selon la revendication 4, **caractérisée en ce que** le tourillon (20) présente une portion de fond (21) de préférence approximativement plane, située sur un plan du fond (B).

6. Capsule selon la revendication 4 ou 5, **caractérisée en ce que** la portion de fond (21) et au moins la portion de paroi de nervure (10) forment un contour extérieur qui est situé sur le plan du fond (B).

7. Capsule selon la revendication 1, **caractérisée en ce que** la rainure présente au moins deux, et de préférence au moins trois, tours de spirale.

8. Capsule selon la revendication 1, **caractérisée en ce que** la configuration de type soufflet est formée par des rainures en forme de U formées vers l'extérieur et vers l'intérieur, qui sont disposées en alternance.

9. Corps de capsule pour une capsule selon l'une quelconque des revendications 1 à 8, constitué d'une paroi latérale (3) et d'un fond (4) réalisé d'une seule pièce avec celle-ci, le fond pouvant être percé et étant configuré sous forme flexible de telle sorte qu'il puisse être déformé par l'action d'une force, **caractérisé en ce que** le fond (4), dans une position de repos, est configuré au moins en partie sous forme de soufflet, la configuration de type soufflet étant formée par des portions de paroi de forme ondulée (8, 9, 10) qui présentent des rainures (8, 9) en forme de U orientées vers l'intérieur, et **en ce qu'**au moins deux rainures (8, 9) sont prévues, lesquelles sont configurées sous forme annulaire par rapport à une vue de dessus du fond (4) et lesquelles sont situées, de préférence par rapport au centre du fond, sur des cercles concentriques, ou **en ce que** la capsule présente une rainure en forme de U qui est configurée en forme de spirale en vue de dessus.

10. Dispositif comprenant une capsule selon l'une quelconque des revendications 1 à 8 pour la préparation d'une boisson, comprenant deux parties de chambre pouvant être pressées l'une contre l'autre pour former une chambre fermée, une partie de chambre étant réalisée sous forme de dispositif de retenue de capsule (16) avec une cavité pour recevoir une capsule et l'autre partie de chambre étant réalisée sous forme de partie de fermeture (17) pour fermer la cavité et le fond de la cavité présentant un moyen contenant de préférence plusieurs éléments de perçage (18) pour percer le fond (4) de la capsule (1) et la partie de fermeture étant également pourvue d'éléments de perçage (19) de telle sorte que lorsque la cavité est fermée, une capsule (1) disposée dans celle-ci puisse être percée au fond (4) et au niveau du couvercle (5) pour le passage d'un liquide.

11. Dispositif selon la revendication 10, **caractérisé en ce qu'**au moins un élément de perçage (18) s'engage avec le fond (4) dans la région des portions de paroi de forme ondulée (8, 9, 10).

12. Dispositif selon la revendication 10 ou 11, **caractérisé en ce qu'**il présente un poinçon (22) de préférence sous forme de rehaussement central pour l'enfoncement de la portion du fond de configuration en forme de soufflet.

13. Dispositif selon la revendication 12, **caractérisé en ce que** le poinçon (22) peut être fixé ou est fixé de manière amovible au fond de la cavité du dispositif de retenue de capsule (16).
